# EUROPÄISCHE PATENTSCHRIFT

(11) **EP 0 806 340 B1**
(45) Veröffentlichungstag und Bekanntmachung des Hinweises auf die Patenterteilung: **09.04.2003**
(21) Anmeldenummer: 97102856.8
(22) Anmeldetag: 21.02.1997
(51) Int. Cl.: B62M 11/16

(54) **Mehrgangnabe mit Rücktrittbremse für Fahrräder**
Multispeed bicycle hub having back pedal brake
Moyeu de bicyclette à plusieurs vitesses avec frein à contre-pédalage

(30) Priorität: 09.05.1996 DE 19618636
(43) Veröffentlichungstag der Anmeldung: 12.11.1997
(73) Patentinhaber: SRAM Deutschland GmbH, 97424 Schweinfurt (DE)
(72) Erfinder: Steuer, Werner, 97424 Schweinfurt (DE)

(56) Entgegenhaltungen:
- DE-A- 3 819 065
- US-A- 3 937 309
- US-A- 4 973 297

## Beschreibung

Die Erfindung betrifft eine Mehrgangnabe gemäß dem Oberbegriff des Anspruchs 1.

Es ist mit der deutschen Patentanmeldung DE-A-37 32 977 eine Mehrgangnabe bekannt, bei welcher innerhalb einer Nabenhülse eine mit dem Fahrradrahmen feststehende Nabenachse und um diese herum ein Antreiber, ein schaltbares Planetengetriebe und eine Bremseinrichtung angeordnet sind. Die Nabe besitzt als Fünf-Gang-Getriebe ein doppeltes Planetenrad sowie zwei abwechselnd festlegbare Sonnenräder, mit Hilfe derer sowohl zwei Berggänge als auch zwei Schnellgänge schaltbar sind. Die Elemente des Planetengetriebes jedoch werden geschaltet, indem entweder ein Planetenradträger oder ein Hohlrad des Planetengetriebes angetrieben wird, um entweder eine Schnellgang- oder eine Berggangübersetzung zu erreichen. Eine dritte Gangstufe wird unter Umgehung des Planetengetriebes als direkter Gang verwendet. Die Betätigung der Bremseinrichtung durch Rückwärtstreten in Bremsdrehrichtung erfolgt durch Übertragung des Drehmomentes vom Antreiber über ein Schaltrad mit einer Mitnehmerscheibe auf den Planetenradträger mit einem Steilgewinde , auf welchem eine Bremskonus unter einen Bremsmantel zur Spreizung desselben geschoben wird. In den Schnellgängen und im Normalgang sind Klauen des Planetenradträgers mit solchen der Mitnehmerscheibe drehfest verbunden. In den Berggängen jedoch ist die Mitnehmerscheibe mit dem Hohlrad des Planetengetriebes verbunden, wodurch beim Rückwärtstreten eine verstärkte Kraft auf die Bremseinrichtung käme, wenn das nach rückwärts gerichtete Drehmoment über das Planetengetriebe verstärkt wird. Um dies zu vermeiden und um in allen Gängen die gleiche Bremswirkung nach rückwärts zu erzielen, werden die Klauen der Mitnehmerscheibe und diejenigen des Hohlrades in der Weise abgeschrägt, daß beim Rückwärtstreten die Mitnehmerscheibe axial in die Klauen des Planetenradträgers zurückgeschoben wird, wobei eine Bremswirkung in der direkten Übersetzung gemäß den Schnellgang- und Normalgangstufen erzielt wird. Die Konstruktion verzichtet gezwungenermaßen auf eine verstärkte Bremswirkung auf die Bremseinrichtung durch die Leitung des Kraftflusses über das Planetengetriebe in allen Gängen. Außerdem ist von der Funktion her mit Problemen beim Eingriff der Klauen der Mitnehmerscheibe in die Klauen des Planetenradträgers beim Rückwärtstreten zu rechnen, da der Planetenradträger in seiner axialen Position fixiert ist und im Falle des Zusammentreffens von den jeweiligen Klauen nicht ausweichen kann. Die vorgeschlagenen Mehrgangnabe hingegen macht sich den Vorteil der Übertragung eines übersetzten Drehmomentes auf die Bremseinrichtung im Normalgang und im Berggang in der Weise zu Nutze, daß durch geeignete Maßnahmen auch im Schnellgang übersetzt gebremst werden kann. Dies wird erreicht durch die spezielle Ausformung der Klauen am Planetenradträger, die die Klauen an der Mitnehmerscheibe beim Rückwärtstreten in axialer Richtung abweisen und zeitlich vor der Übertragung des Bremsmomentes eine Kupplung zwischen dem Kupplungsrad und dem Hohlrad herstellen. Auf diese Weise wird im Schnellgang ebenso wie in den beiden übrigen Gängen des Dreigang-Planetengetriebes eine übersetzte, also verstärkte Bremswirkung erzielt.

Es ist somit die Aufgabe der Erfindung, eine Mehrgangnabe mit einem Planetengetriebe zu schaffen, dessen Dreigang-Schalteinrichtung in der Weise modifiziert ist, daß nicht nur im Berggang und im Normalgang, sondern auch im Schnellgang mit Übersetzung gebremst werden kann.

Die Lösung der Aufgabe ist in den Ansprüchen beschrieben.

ein Ausführungsbeispiel einer übersetzt bremsenden Dreigangnabe wird in Zeichnungen und Skizzen erläutert. Es zeigt:
- Fig. 1: einen Halbschnitt einer Dreigangnabe mit einem Planetengetriebe, bestehend aus einem Hohlrad, Planetenrädern auf einem Planetenradträger und einem Sonnenrad mit einer Schalteinrichtung in Form eines Kupplungsrades mit einer Kupplungsscheibe;
- Fig. 2: Mitnehmerklauen des Kupplungsrades in einer Nut mit einer Abweisfläche im Planetenradträger;
- Fig. 3: die Mitnehmerklauen mit einer Hilfsschräge, passend zu einer Sicherheitsschräge im Planetenradträger;
- Fig. 4: eine Ausführung der Nut im Planetenradträger gemäß dem Stand der Technik;
- Fig. 5,6,7: die Anordnung der am Schaltvorgang beteiligten Elemente, nämlich Planetenradträger, Kupplungsrad mit Kupplungsscheibe und Hohlrad zur Beschreibung des Bremsvorganges im Schnellgang.

Wird mit 1 eine Nabenachse einer Mehrgangnabe, insbesondere eine Dreigangnabe bezeichnet, so umgibt diese eine konzentrische Nabenhülse 2, einen Antreiber 5, ein Planetengetriebe 3 sowie eine Rücktrittbremseinrichtung 4. Das Planetengetriebe 3 besteht aus einem Hohlrad 6, einem Planetenradträger 7 mit Planetenrädern 22 und einem feststehenden, mit der Nabenachse 1 fest verbundenen Sonnenrad 8.

Die Bremseinrichtung 4 umfaßt einen Bremsmantel 15 sowie einen Bremskonus 17, der über ein Steilgewinde 16 mit dem Planetenradträger 7 verbunden ist. Der Bremsmantel 15 ist zweigeteilt und spreizt sich bis zur Anlage an der Nabenhülse 2 dadurch auf, daß sich der Bremskonus 17 auf einer schiefen Ebene unter diesen schiebt. Der Bremsmantel 15 ist gegen Drehung durch eine Verrastung mit einem Hebelkonus 26 verbunden, der die auftretenden Bremskräfte an den Rahmenbau des Fahrrades durch einen mit diesem verbundenen Bremshebel weiterleitet. Die Erfindung bezieht sich im wesentlichen auf die Schalteinrichtung zum Schalten der drei Gänge bei der Betätigung des Antreibers 5 in einer Antriebsdrehrichtung A sowie auf die Funktion der Bremseinrichtung beim Betätigen des Antreibers 5 in einer Bremsdrehrichtung B, die der Antriebsdrehrichtung A entgegengesetzt ist. Beim Schalten eines Schnellgangs, eines Normalgangs und eines Bergganges wird der Antreiber 5 über eine mit diesem in axialer Richtung beweglich verbundenen Kupplungsrad 9, welches mit einer Kupplungsscheibe 10 eine Baueinheit bildet, entweder mit dem Hohlrad 6 oder aber mit dem Planetenradträger 7 zusammengeschaltet.

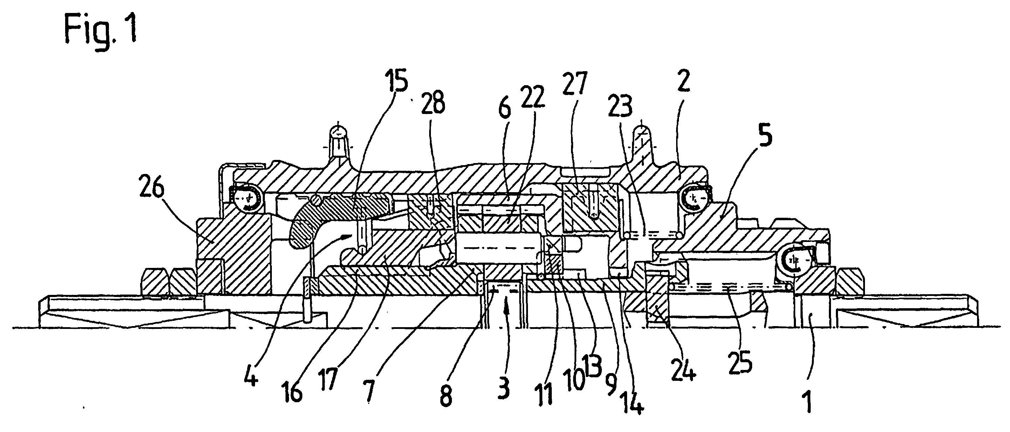

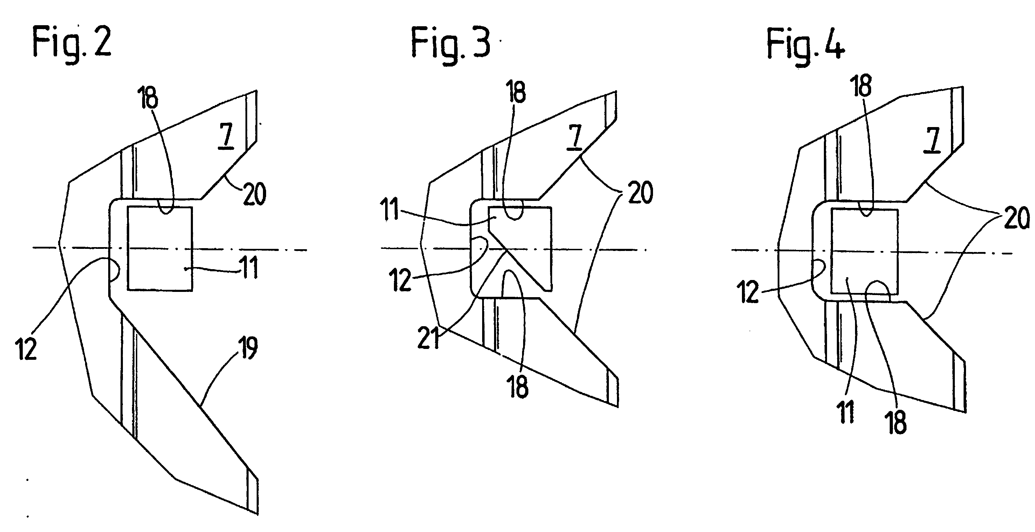

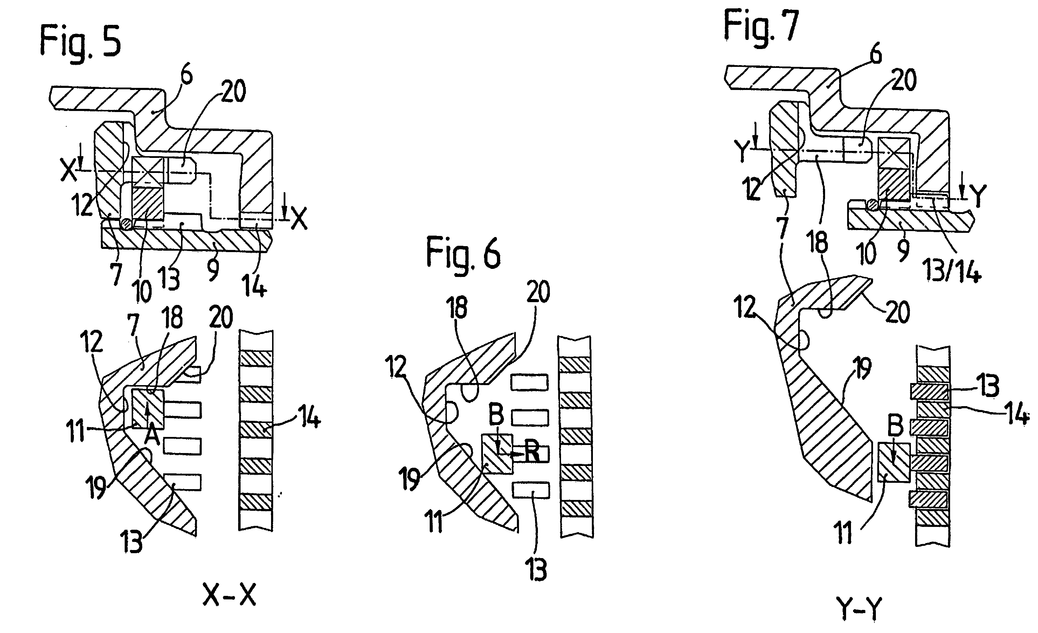

Wie aus Fig. 1 hervorgeht, ist die Dreigangnabe im Schnellgang dargestellt, der bei Antrieb des Antreibers 5 in Antriebsdrehrichtung A die Nabenhülse 2 über das Planetengetriebe 3 ins Schnelle dadurch übersetzt, daß der Kraftfluß vom Antreiber 5 über das Kupplungsrad 9, die Kupplungsscheibe 10, den Planetenradträger 7, die Planetenräder 22 unter Abstützung am Sonnenrad 8, das Hohlrad 6 und ein erstes Klinkengesperre 27 auf die Nabenhülse 2 erfolgt. Die Drehmomentübertragung vom Kupplungsrad 9 auf den Planetenradträger 7 erfolgt über eine Längsverzahnung 13, auf welcher die Kupplungsscheibe 10 drehfest angeordnet ist und Mitnehmerklauen 11, die an der äußeren Peripherie der Kupplungsscheibe 10 angeordnet sind und in Nuten 12 des Planetenradträgers 7 hineinragen. Die Nuten 12 sind nach dem Erfindungsvorschlag gemäß Fig. 2 mit einer Kupplungsfläche 18, die das Drehmoment der Mitnehmerklaue 11 übertragen kann, einer Sicherheitsschräge 20 und einer Abweisfläche 19 ausgestattet, so daß das Drehmoment in der Antriebsdrehrichtung A durch Anlage der Mitnehmerklaue 11 an der Kupplungsfläche 18 übertragen werden kann, wohingegen beim Drehen der Mitnehmerklaue 11 in Bremsdrehrichtung B die Mitnehmerklaue 11 an der Abweisfläche 19 abgewiesen und aus der Nut 12 in einer Ausschieberichtung R bewegt wird, wie aus Fig. 6 ersichtlich.

Die Figur 3 zeigt eine Variante der Mitnehmerklaue 11 in einer Nut 12, die auf beiden Seiten eine Kupplungsfläche 18 besitzt, wobei aber die Mitnehmerklaue 11 eine Hilfsschräge 21 aufweist, die beim Antrieb in Bremsdrehrichtung B eine Bewegung der Mitnehmerklaue 11 in Ausschieberichtung R bewirkt. Die Nut 12 selbst hat neben den Kupplungsflächen 18 zwei Sicherheitsschrägen 20, die zum Stand der Technik gehören.

Figur 4 zeigt als Stand der Technik eine Nut 12 mit zwei Kupplungsflächen 18 und zwei Sicherheitsschrägen 20 sowie eine darin eintauchende Mitnehmerklaue 11 ohne Hilfsschräge, was zur Folge hat, daß sowohl in der Antriebsdrehrichtung A wie auch in der Bremsdrehrichtung B ein Drehmoment übertragbar ist.

Im Folgenden wird kurz auf die Schaltung der drei Gänge eingegangen, wobei aber anschließend lediglich der Bremsvorgang im Schnellgang als Erfindungsvorschlag von Interesse ist. In der gemäß Fig. 1 dargestellten Schnellgangposition hat ein Schubklotz 24 das Kupplungsrad 9 bis zum Anschlag in Richtung Nabenmitte verschoben, so daß die Kupplungsscheibe 10 mit ihren Mitnehmerklauen 11 in den Nuten 12 des Planetenradträgers 7 eintaucht. Zum Einschalten des Normalganges wird des Schubklotz 24 die Hälfte seines möglichen Weges gegen eine Feder 25 nach außen hin verschoben, so daß das Kupplungsrad 9 mit seiner Längsverzahnung 13 in die Kupplungsverzahnung 14 des Hohlrades 6 eintaucht, und die Kupplungsscheibe 10 gegen eine Planfläche am Hohlrad 6 anschlägt und den Klauenverband zwischen der Mitnehmerklaue 11 und der Nut 12 verlassen hat. In dieser Konstellation ist der Normalgang unter Umgehung des Planetengetriebes 3 eingeschaltet, wobei der Antreiber das Kupplungsrad und somit das Hohlrad antreibt, auf welchem ein erstes Klinkengesperre 27 für den Antrieb der Nabenhülse 2 direkt sorgt. Der Berggang ist dann eingeschaltet, wenn der Schubklotz in der vorbeschriebenen Richtung weiter bis zum Anschlag verschoben wird, wodurch das Hohlrad 6 von der Kupplungsscheibe 10 mitgenommen wird, wodurch das erste Klinkengesperre 27 ausgehoben wird. Der Kraftfluß verläuft somit vom Hohlrad 6 über das Planetengetriebe 3 zum langsamer laufenden Planetenträger 7, der in der Antriebsrichtung den Bremskonus 17 mit seinem darauf angeordneten zweiten Klinkengesperre 28 mitnimmt und die Nabenhülse 2 antreibt.

Gemäß den Figuren 5, 6 und 7 wird nunmehr der Bremsvorgang im Schnellgang, wie er in Fig. 1 dargestellt ist, beschrieben. In einer Antriebsdrehrichtung befindet sich die Mitnehmerklaue 11 in der Nut 12 des Planetenradträgers 7 zu dessen Antrieb in Wirkverbindung mit der Kupplungsfläche 18. Im oberen Teil der Fig. 5 ist ein Ausschnitt der Schnittzeichnung gemäß der Fig. 1 dargestellt. Es ist hier der Weg der des Kraftverlaufes vom Kupplungsrad 9 zum Planetenradträger 7 über die Kupplungsscheibe 10 gut zu erkennen. Bei Antrieb in Bremsdrehrichtung B wird die Mitnehmerklaue 11 an der Abweisfläche 19 in der Ausschieberichtung R abgewiesen, wodurch sich die Längsverzahnung 13 ebenfalls in der Ausschieberichtung R auf die Kupplungsverzahnung 14 zu bewegt. In Folge des Antriebs in Bremsdrehrichtung B wird schließlich gemäß Fig. 7 die Mitnehmerklaue 11 ganz aus der Nut 12 in Ausschieberichtung über die Abweisfläche 19 ausgeschoben, wodurch sich die Längsverzahnung 13 des Kupplungsrades 9 in die Kupplungsverzahnung 14 des Hohlrades 6 einschiebt. Erst jetzt wird das Hohlrad in Bremsdrehrichtung B weiter mitgenommen, wodurch sich das Hohlrad 6 synchron mit dem Antreiber 5 bewegt und über die Planetenräder 22 den Planetenradträger 7 ins Langsame antreibt, wodurch der Bremskonus 17 sich auf dem Steilgewinde 16 unter den Bremsmantel 15 schiebt und eine Bremsung durch dessen Aufspreitzung gegen die Nabenhülse 2 bewirkt.

Wie im Schnellgang gemäß der eben beschriebenen Funktion wird das Hohlrad 6 auch im Normalgang wie auch im Berggang direkt vom Kupplungsrad angetrieben, wodurch sich ebenso die bremsverstärkende Wirkung beim Antrieb des Antreibers 5 in Bremsdrehrichtung B unter Einschaltung des Planetengetriebes einstellt. War die Bremsverstärkung im Berggang und im Normalgang bisher schon als Vorteil erachtet worden, so erweist sich eine Bremsverstärkung im Schnellgang als ganz besonders vorteilhaft. Mit Ausnehme einer geringfügigen Totgangvergrößerung zwischen dem Antrieb in der Antriebsrichtung A und der dem Antrieb in Bremsdrehrichtung B entstehen weder Nachteile auf funktionellem Gebiet wie auch auf der Kostenseite.

## Patentansprüche

1. Mehrgangnabe mit Rücktrittbremse für Fahrräder, umfassend eine Nabenachse (1) und eine um diese herum drehbar angeordnete Nabenhülse (2), die mindestens ein Planetengetriebe (3), eine Rücktrittbremseinrichtung (4) und einen Antreiber (5) umgreift, wobei das Planetengetriebe (3) aus mindestens einem Hohlrad (6), einem Planetenradträger (7), mit zumindest einstufigen Planetenrädern (22) und mindestens einem auf der Nabenachse (1) festlegbaren Sonnenrad (8) besteht, wobei weiter ein Kupplungsrad (9) drehfest aber axial verschiebbar mit dem Antreiber (5) verbunden ist, welches mit einer Kupplungsscheibe (10) eine Baueinheit bildet, die wahlweise eine Klauenverbindung mit dem Planetenradträger (7) über Mitnehmerklauen (11) an der Kupplungsscheibe (10) und Nuten (12) im Planetenradträger (7) sowie eine Mitnahmeverbindung mit dem Hohlrad (6) über eine Längsverzahnung (13) auf dem Kupplungsrad (9) und eine Kupplungsverzahnung (14) im Hohlrad (6) herstellen kann, wobei schließlich die Bremseinrichtung (4), bestehend aus einem Bremsmantel (15) und einem auf einem Steilgewinde (16) des Planetenradträgers (7) angeordneten Bremskonus (17), der durch Antrieb des Antreibers (5) in einer Bremsdrehrichtung (B) gegen den Bremsmantel (15) verschoben werden kann,
**dadurch gekennzeichnet,**
**daß** die Nuten (12) des Planetenradträgers (7) in einer Antriebsdrehrichtung (A) zur Nabenachse (1) parallele Kupplungsflächen (18) und in Bremsdrehrichtung (B) zur Nabenachse (1) geneigte Abweisflächen (19) aufweisen, wobei im Falle des Antriebs in Antriebsdrehrichtung (A) die Mitnehmerklauen (11) der Kupplungsscheibe (10) den Planetenradträger (7) über die Kupplungsflächen (18) mitnehmen, wobei aber im Falle des Antriebs in Bremsdrehrichtung (B) die Mitnehmerklauen (11) der Kupplungsscheibe (10) über die geneigten Abweisflächen (19) aus den Nuten (12) des Planetenradträgers (7) in einer Ausschieberichtung (R) herausgeschoben werden, wodurch das Kupplungsrad (9) mit seiner Längsverzahnung (13) in Eingriff mit der Kupplungsverzahnung (14) des Hohlrades (6) kommt.

2. Mehrgangnabe nach Anspruch 1,
**dadurch gekennzeichnet,**
**daß** die Mitnehmerklauen (11) der. Kupplungsscheibe (10) Hilfsschrägen (21) aufweisen, die mit einer Sicherheitsschräge (20) am Planetenradträger (7) etwa in gleicher Richtung verläuft und im Falle des Antriebs in Bremsdrehrichtung (B) mit dieser zusammenwirkt in der Weise, daß die Mitnehmerklauen (11) der Kupplungsscheibe (10) aus den Nuten (12) des Planetenradträgers (7) in Ausschieberichtung (R) herausgeschoben werden, wodurch das Kupplungsrad (9) mit seiner Längsverzahnung (13) in Eingriff mit der Kupplungsverzahnung (14) des Hohlrades (6) kommt.

3. Mehrgangnabe nach einem der Ansprüche 1 oder 2,
**dadurch gekennzeichnet,**
**daß** eine Feder (23) das Hohlrad (6) entgegen der Ausschieberichtung (R) der Kupplungsscheibe (10) gerichtet vorspannt, um beim Aufeinandertreffen der Stirnflächen der Zähne der Längsverzahnung (13) mit denen der Kupplungsverzahnung (14) durch das Ausweichen der Kupplungsverzahnung (14) in Ausschieberichtung (R) ausreichend Raum und Zeit für das Ineinanderschieben der Verzahnungen (13 und 14) zu schaffen.

## Claims

1. Multi-speed hub with back-pedalling brake for bicycles, comprising a hub axle (1) and a hub sleeve (2) which is arranged so as to be rotatable about the hub axle (1) and encloses at least one epicyclic gear unit (3), a back-pedalling brake device (4) and a driver (5), the epicyclic gear unit (3) consisting of at least one ring gear (6), a planet-gear carrier (7), with at least single-stage planet gears (22), and at least one sun gear (8) which can be secured to the hub axle (1), a clutch wheel (9) also being connected to the driver (5) in a rotationally locked but axially displaceable manner, this clutch wheel (9) together with a clutch disc (10) forming a construction unit which can alternatively produce a claw connection with the planet-gear carrier (7) via driving claws (11) on the clutch disc (10) and grooves (12) in the planet-gear carrier (7) and a driving connection with the ring gear (6) via a longitudinal tooth system (13) on the clutch wheel (9) and a coupling tooth system (14) in the ring gear (6), and finally the brake device (4), consisting of a brake shell (15) and a brake cone (17) which is arranged on a coarse-pitch thread (16) of the planet-gear carrier (7) and can be displaced against the brake shell (15) by driving the driver (5) in a braking direction of rotation (B), [lacuna], **characterized in that** the grooves (12) of the planet-gear carrier (7), in a driving direction of rotation (A), have coupling surfaces (18) parallel to the hub axle (1) and, in a braking direction of rotation (B), have deflecting surfaces (19) inclined relative to the hub axle (1), the driving claws (11) of the clutch disc (10) driving the planet-gear carrier (7) via the coupling surfaces (18) in the event of driving in the driving direction of rotation (A), but the driving claws (11) of the clutch disc (10) being pushed out of the grooves (12) of the planet-gear carrier (7) in a push-out direction (R) via the inclined deflecting surfaces (19) in the event of driving in the braking direction of rotation (B), as a result of which the clutch wheel (9), with its longitudinal tooth system (13), comes into engagement with the coupling tooth system (14) of the ring gear (6).

2. Multi-speed hub according to Claim 1,
**characterized in that** the driving claws (11) of the clutch disc (10) have an auxiliary bevel (21) which runs approximately in the same direction as a safety bevel (20) on the planet-gear carrier (7) and interacts with the latter in the event of driving in the braking direction of rotation (B) in such a way that the driving claws (11) of the clutch disc (10) are pushed out of the grooves (12) of the planet-gear carrier (7) in the push-out direction (R), as a result of which the clutch wheel (9), with its longitudinal tooth system (13), comes into engagement with the coupling tooth system (14) of the ring gear (6).

3. Multi-speed hub according to either of Claims 1 and 2, **characterized in that** a spring (23) presses the ring gear (6) in opposition to the push-out direction (R) of the clutch disc (10), so that, when the end faces of the teeth of the longitudinal tooth system (13) meet those of the coupling tooth system (14), sufficient space and time is created for the tooth systems (13 and 14) to be pushed one inside the other due to the yielding of the coupling tooth system (14) in the push-out direction (R).

## Revendications

1. Moyeu de bicyclette à plusieurs vitesses avec frein à contre-pédalage, comprenant un axe de moyeu (1) et une douille de moyeu (2) disposée de façon à pouvoir tourner autour de celui-ci, qui entoure au moins un engrenage planétaire (3), un dispositif de freinage à contre-pédalage (4) et un entraîneur (5), dans lequel l'engrenage planétaire (3) se compose d'au moins une roue creuse (6), d'un support de roues planétaires (7), avec des roues planétaires à au moins un étage (22) et au moins une roue solaire (8) à fixer sur l'axe de moyeu (1), dans lequel une roue d'accouplement (9) est en outre calée mais mobile axialement avec l'entraîneur (5), qui forme avec un disque d'accouplement (10) une unité modulaire, qui peut établir au choix un assemblage à griffes avec le support de roues planétaires (7) par l'intermédiaire de griffes d'entraînement (11) sur le disque d'accouplement (10) et de rainures (12) dans le support de roue planétaire (7) ainsi qu'un assemblage d'entraînement avec la roue creuse (6) par l'intermédiaire d'une denture longitudinale (13) sur la roue d'accouplement (9) et d'une denture d'accouplement (14) dans la roue creuse (6), dans lequel enfin le dispositif de freinage (4), se composant d'une enveloppe de frein (15) et d'un cône de frein (17) disposé sur un filet rapide (16) du support de roues planétaires (7), qui peut être déplacé contre l'enveloppe de frein (15) par entraînement de l'entraîneur (5) dans un sens de rotation de freinage (B), **caractérisé en ce que** les rainures (12) du support de roues planétaires (7) présentent dans un sens de rotation d'entraînement (A) des faces d'accouplement (18) parallèles à l'axe de moyeu (1) et dans le sens de rotation de freinage (B) des faces d'écartement (19) inclinées par rapport à l'axe de moyeu (1), dans lequel, en cas d'entraînement dans le sens de rotation d'entraînement (A), les griffes d'entraîneur (11) du disque d'accouplement (10) entraînent le support de roues planétaires (7) par l'intermédiaire des faces d'accouplement (18), dans lequel cependant, en cas d'entraînement dans le sens de rotation de freinage (B), les griffes d'entraîneur (11) du disque d'accouplement (10) sont repoussées hors des rainures (12) du support de roues planétaires (7) dans un sens de refoulement (R) par l'intermédiaire des faces d'écartement inclinées (19), ce qui met la roue d'accouplement (9) avec sa denture longitudinale (13) en prise avec la denture d'accouplement (14) de la roue creuse (6).

2. Moyeu à plusieurs vitesses suivant la revendication 1, **caractérisé en ce que** les griffes d'entraîneur (11) du disque d'accouplement (10) présentent des rampes auxiliaires (21), qui sont orientées sensiblement dans la même direction qu'une rampe de sécurité (20) sur le support de roues planétaires (7) et qui, en cas d'entraînement dans le sens de rotation de freinage (B), coopèrent avec celle-ci de telle manière que les griffes d'entraîneur (11) du disque d'accouplement (10) soient repoussées hors des rainures (12) du support de roues planétaires (7) dans le sens de refoulement (R), ce qui met la roue d'accouplement (9) avec sa denture longitudinale (13) en prise avec la denture d'accouplement (14) de la roue creuse (6).

3. Moyeu à plusieurs vitesses suivant l'une des revendications 1 ou 2, **caractérisé en ce qu'**un ressort (23) applique une contrainte préalable à la roue creuse (6) dans un sens opposé au sens de refoulement (R) du disque d'accouplement (10), afin de procurer, lors de l'entrée en contact des faces frontales des dents de la denture longitudinale (13) avec celles de la denture d'accouplement (14) par suite de l'écartement de la denture d'accouplement (14) dans le sens de refoulement (R), suffisamment d'espace et de temps pour l'engrènement des dentures (13 et 14).
